# EUROPÄISCHE PATENTSCHRIFT

(11) **EP 0 657 461 B1**
(45) Veröffentlichungstag und Bekanntmachung des Hinweises auf die Patenterteilung: **30.12.1998**
(21) Anmeldenummer: 94117054.0
(22) Anmeldetag: 28.10.1994
(51) Int. Cl.: C07F 7/16, A62D 3/00, C01B 33/02

(54) **Abwasserfreies Verfahren zur Entsorgung feststoffhaltiger Rückstände einer Organochlorsilansynthese**
Waste water free process for the disposal of solid residue of the direct process for the preparation of organosilanes
Procédé d'élimination des résidus solides de procédé direct pour la préparation d'organosilanes sans génération d'eau usée

(30) Priorität: 13.12.1993 DE 4342413
(43) Veröffentlichungstag der Anmeldung: 14.06.1995
(73) Patentinhaber: HÜLS AKTIENGESELLSCHAFT, 45764 Marl (DE)
(72) Erfinder: Ruff, Klaus, D-53840 Troisdorf (DE); Brumme, Johannes, Dr., D-01169 Dresden (DE); Heinze, Ulrich, Dr., D-01612 Nünchritz (DE)

(56) Entgegenhaltungen:
- EP-A- 0 356 881
- EP-A- 0 428 337
- EP-A- 0 433 600
- EP-A- 0 603 691
- DE-A- 4 205 980
- DATABASE WPI Derwent Publications Ltd., London, GB; AN 90-098196 & SU-A-1 490 098 (GIPROTSVETMETOBRABO)

## Beschreibung

Gegenstand der vorliegenden Erfindung ist ein abwasserfreies Verfahren zur Entsorgung feststoffhaltiger Rückstände, die bei der Organochlorsilansynthese anfallen. Diese Rückstände müssen umweltgerecht entsorgt werden.

Von den Organochlorsilanen stellen die Methylchlorsilane den mengenmäßig größten Anteil. Sie werden üblicherweise durch kupferkatalysierte Direktsynthese von Silicium mit Chlormethan gewonnen. Produziert wird in kontinuierlich betriebenen Wirbelschichtreaktoren, die als Feststoffe neben staubförmigem metallischem Silicium Kupfer als Katalysator und z.B. Zink als Promotor enthalten. In den Wirbelschichtreaktor strömt von unten Chlormethan als Reaktionsmedium und Fluidisiergas, während über Kopf die gebildeten Methylchlorsilane mit unreagiertem Chlormethan gasförmig abgezogen werden. Mit dem gasförmigen Produktstrom werden auch staubförmige Feststoffe aus dem Reaktor ausgetragen, die durch Zyklone abgeschieden und teils in den Reaktor zurückgeführt oder aus dem Prozeß ausgeschleust werden. Nach DE-A-31 46 206 ist es für die Reaktionsselektivität vorteilhaft, die feinsten ausgetragenen Partikel, die die höchsten Gehalte an Nicht-Silicium-Komponenten und den niedrigsten Gehalt an Silicium besitzen, hier auszuschleusen. Dieser Zyklonstaub enthält noch anhaftende Methylchlorsilane.

Die durch Zyklone vorgereinigten Reaktionsgase enthalten immer noch geringe Staubmengen, die in einer nachgeschalteten Naßwäsche mit aus dem Syntheseprozeß stammenden Hochsiedern ausgewaschen werden. Aus dieser Naßwäsche können die ausgewaschenen feinteiligen Feststoffe durch Eindampfen aufkonzentriert werden, so daß ein schlammartiger Naßwäscherückstand zurückbleibt. Der Kupfergehalt der Rückstände, bezogen auf den Feststoff, beträgt jeweils etwa 6 bis 10 Gew.-%, der Zinkgehalt 0,05 bis 0,15 Gew.-%.

Zyklonstaub und Naßwäscherückstand können für den Prozeß nicht weiter verwendet werden. Diese Rückstände sind reaktiv und zum Teil pyrophor, so daß eine Deponierung ohne vorherige Behandlung ausscheidet. Eine Entsorgungsmöglichkeit ist die Verbrennung. Dabei fallen aber metallhaltige Verbrennungsrückstände, fein verteilte Kieselsäure und Chlorwasserstoff an, deren Beseitigung das Verfahren unwirtschaftlich macht.

Eine andere Möglichkeit besteht in einer Hydrolyse der Rückstände in wäßriger Phase, in der die Si-Cl-Bindungen unter Freisetzung von Salzsäure in Si-O-Si-Bindungen überführt werden. Nach dem Abfiltrieren des Feststoffes von der Salzsäure erhält man einen feuchten Filterkuchen und ein salzsaures Abwasser. Der Filterkuchen kann nicht auf einer oberirdischen Deponie gelagert werden, da er die Anforderungen der in der Bundesrepublik Deutschland geltenden 2. Allgemeinen Verwaltungsvorschrift zum Abfallgesetz (TA Abfall) an maximal eluierbare Metallmengen nicht erfüllt. Insbesondere werden die Eluatkriterien bei Kupfer und Zink weit überschritten (Grenzwerte für Eluat: Cu 10 mg/l, Zn 10 mg/l, adsorbierbare organische Halogenverbindungen (AOX) 3 mg/l, totaler organischer Kohlenstoffgehalt (TOC) 200 mg/l). Auch durch wiederholtes Waschen mit kaltem oder heißem Wasser lassen sich diese Grenzwerte nicht erreichen. Ebenfalls kann das Abwasser aus der Hydrolyse nicht abgegeben werden, da die für die Einleitung in einen Vorfluter einzuhaltenden Maximalkonzentrationen, insbesondere wiederum bei Kupfer und Zink, gemäß dem 22. Anhang der Rahmen-Abwasser-Verwaltungsvorschrift, nicht einzuhalten sind (Grenzwerte für Abwasser: Cu 0,5 mg/l, Zn 2 mg/l).

Nach EP-A-0 210 418 kann man das Kupfer aus den Rückständen im Anschluß an eine Hydrolyse durch Beaufschlagen der Hydrolysesuspension mit technischem Sauerstoff bei erhöhtem Druck herauslösen, den Feststoff abfiltrieren und waschen, aus dem Filtrat mit Erdalkali- oder Alkalihydroxid das Kupfer ausfällen und abfiltrieren. Weder der Filterkuchen noch das Abwasser genügen aber den oben genannten Grenzen (Schwermetallgehalt des Abwassers gemäß Ausführungsbeispiel etwa 50 mg/l).

Aus den deutschen Patentanmeldungen DE-A-39 41 825 und DE-A-39 41 827 sind Verfahren zur abwasserfreien Aufarbeitung von Rückständen einer Chlorsilandestillation bekannt. Diese Verfahren lassen sich wegen der anderen Zusammensetzung der Rückstände jedoch nicht auf die Rückstände einer Organochlorsilansynthese übertragen.

Es bestand daher das Problem, die bei der Organochlorsilansynthese anfallenden feststoffhaltigen Rückstände unter Einhaltung der genannten behördlichen Auflagen in wirtschaftlicher Weise umweltgerecht zu entsorgen.

Dieses Problem wird gemäß der Erfindung gelöst durch
a) Behandlung des aus dem Prozeß auszuschleusenden Feststoffs in wäßriger Phase mit Verbindungen von Elementen der ersten und zweiten Hauptgruppe des Periodischen Systems,
b) Auftrennung der entstehenden Suspension in eine feststoffhaltige und eine wäßrige Phase und
c) Rückführung der wäßrigen Phase in die Stufe a),
wobei man die Rückstände einer Organochlorsilansynthese in der Stufe a) mit Alkali- und/oder Erdalkalihydroxiden und/oder Alkali- und/oder Erdalkalicarbonaten versetzt.

Es ist zweckmäßig und wirtschaftlich, die aus den Zyklonen und der Naßwäsche der Reaktionsgase gewonnenen Rückstände gemeinsam zu behandeln. Die bei dem vorgeschlagenen Kreislaufverfahren mit dem feuchten Filterkuchen ausgeschleuste Wassermenge ergänzt man zweckmäßigerweise mit der Zugabe der Neutralisationsmittel.

Folgende Beobachtung wurde gemacht: Man bringt Zyklonstaub und Naßwäscherückstand in eine wäßrige Phase ein, versetzt die Suspension mit Alkali-oder Erdalkalihydroxid, um die durch Hydrolyse entstandene Salzsäure zu neutralisieren und Kupfer und Zink ganz oder teilweise in die entsprechenden Hydroxide zu überführen, und trennt anschließend die Suspension durch Filtration in einen feuchten Filterkuchen und Filtrat auf. Je nach erreichtem pH-Wert bei der Hydroxidzugabe erhält man Filterkuchen, die die Eluatkriterien der TA Abfall erfüllen, das Filtrat hat jedoch stets viel zu hohe Metallkonzentrationen, insbesondere an Kupfer, um ohne weitere Behandlungsstufen ins Abwasser eingeleitet zu werden. Führt man aber erfindungsgemäß das Filtrat in die Hydrolysestufe zurück, bringt man also Zyklonstaub und Naßwäscherückstand in rückgeführtes Filtrat ein und versetzt vorher oder nachher mit Alkali- oder Erdalkalihydroxid, so erfüllt überraschenderweise der durch Filtration abgetrennte Filterkuchen die Anforderungen der TA Abfall für eine oberirdische Deponierung. Auf diese Weise läßt sich der Rückstand abwasserfrei und wirtschaftlich entsorgen. Bei Einsatz von NaOH ist ein pH-Wert von mindestens 6, bei Einsatz von Ca(OH)₂ ein pH-Wert von mindestens 4,5 in der Suspension vor der Filtration einzustellen.

Die Zugabe von NaOH oder Ca(OH)₂ zur Rückstandssuspension bewirkt eine Wasserstoffentwicklung, die pH-Wert-abhängig ist. Diese Wasserstoffentwicklung ist bei Einsatz von NaOH bei höheren pH-Werten besonders stark, so daß Vorsorge zur Vermeidung explosionsfähiger Gasgemische getroffen werden muß. Sinnvollerweise wird man daher bei Einsatz von NaOH den pH-Wert auf maximal 7,5 beschränken.

Die Konzentration des entstehenden Wasserstoffs im Gasraum bei der Neutralisation der Rückstandssuspension läßt sich auch durch entstehendes CO₂ beim Einsatz von Na₂CO₃ oder CaCO₃ an Stelle von NaOH bzw. Ca(OH)₂ senken. Die Verwendung dieser Carbonate ergibt im vorgeschlagenen Verfahren ebenfalls Filterkuchen, die gemäß der TA Abfall deponierbar sind. Bei Einsatz von Na₂CO₃ sollte der pH-Wert mindestens 5 betragen, bei CaCO₃ mindestens 4,0.

An die apparative Ausrüstung werden beim vorgeschlagenen Verfahren keine besonderen Anforderungen gestellt. Die Hydrolyse und die Neutralisation der Rückstandssuspension können in einem Rührbehälter mit Doppelmantel durchgeführt werden; für die Abtrennung der Feststoffe aus der Suspension können übliche Filter oder Zentrifugen eingesetzt werden.

Der abgetrennte feuchte Filterkuchen enthält weniger als 25% Restfeuchte; er ist stichfest und entmischt sich nicht beim Transport.

Das erfindungsgemäße Verfahren läßt sich auch dann erfolgreich einsetzen, wenn man zwischen Hydrolyse und Neutralisation eine Auslaugstufe zur Entfernung des Kupfers aus den Rückständen schaltet. Diese Auslaugung kann z.B. mit Schwefelsäure oder Salzsäure durchgeführt werden; der ausgelaugte Rückstand ist nicht unmittelbar nach TA Abfall oberirdisch deponierbar, da auch bei mehrfachem Waschen mit Wasser Eluat-Werte von 30 bis 100 mg Cu/l erhalten werden. Erst das beschriebene Kreislaufverfahren sorgt für Abwasserfreiheit und einen oberirdisch deponierbaren Rückstand.

### Beispiel 1:

Von der in einer Methylchlorsilananlage anfallenden Rückstandsmenge werden Zyklonstaub und Naßwäscherückstand, der aus dem Naßwäschekreislauf durch Eindampfen bei 165°C als 50%ige Suspension von Feinstaub in hochsiedenden Organochlorsilanverbindungen erhalten wurde, anteilig absatzweise zu 100 kg in ein Rührwerk eingefüllt, das mit 400 kg Rückfiltrat gefüllt ist. Nach einer Reaktionszeit vom 0,5 Stunden ist die Temperatur infolge der Reaktion zwischen den Organochlorsilanen und Wasser auf etwa 40°C gestiegen. Anschließend wird die Suspension mit NaOH auf einen pH-Wert von 7 eingestellt und filtriert. Das Filtrat wird im nächsten Ansatz verwendet. Eine Probe des feuchten Filterkuchens wird mit der 10fachen Menge an Wasser 24 Stunden eluiert. Das Eluat enthält dann an Kupfer 0,1 bis 0,4 mg/l, an Zink 0,1 bis 0,3 mg/l, der AOX-Wert beträgt 0,1 mg/l und der TOC-Wert 6 bis 9 mg/l. Auch die anderen Kriterien der TA Abfall sind erfüllt. Im rückgeführten Filtrat befinden sich an Kupfer 15 bis 30 mg/l, an Zink 30 bis 60 mg/l.

Stellt man die Suspension mit NaOH dagegen auf einen pH-Wert von 5 ein, erhält man im Eluat des feuchten Filterkuchens 25 mg Cu/l und 15 mg Zn/l.

### Beispiel 2: (Vergleichsbeispiel)

Die Rückstandssuspension nach Beispiel 1 wird nach der Hydrolyse abfiltriert. Der feuchte Filterkuchen wird wie in Beispiel 1 eluiert; man erhält im Eluat 120 mg Cu/l. Nachdem der feuchte Filterkuchen 6mal mit Wasser im Verhältnis 1:1 gewaschen und filtriert wurde, werden im Eluat des feuchten Filterkuchens 20 mg Cu/l gemessen.

### Beispiel 3:

Der Rückstand wird nach Beispiel 1 im Rückfiltrat hydrolysiert. Anschließend wird die Suspension mit Calciumhydroxid auf pH 9 eingestellt. Nach Abfiltrieren des Feststoffs und Rückführung des Filtrates bleibt ein feuchter Filterkuchen, dessen Eluat nach Durchführung der Elution wie in Beispiel 1 0,03 bis 0,05 mg Cu/l und 0,03 bis 0,05 mg Zn/l enthält, während das Filtrat 50 bis 70 mg Cu/l und 20 bis 40 mg Zn/l aufweist.

Nimmt man zur basischen Einstellung Na₂CO₃, so werden bei Arbeiten bei einem pH-Wert von 8,5 beim Eluat Werte von 0,08 bis 0,1 mg Cu/l, 0,01 mg Zn/l, 0,1 mg AOX/l und 20 bis 30 mg TOC/l gemessen.
Bei Einsatz von CaCO₃ in derselben Weise lauten die Werte bei pH 4,5 beim Eluat 0,1 bis 1 mg Cu/l, 0,1 bis 0,6 mg Zn/l, 0,1 mg AOX/l und 6 bis 8 mg TOC/l.

### Beispiel 4:

100 g Rückstand einer Methylchlorsilananlage, bestehend aus anteiligen Mengen Zyklonstaub und Naßwäscherückstand, werden mit 400 g 20%iger Salzsäure bei 80°C 2 Stunden in einem offenen Rührgefäß ausgelaugt. Der Feststoff wird abfiltriert. Der feuchte Filterkuchen wird mit der doppelten Gewichtsmenge an Rückfiltrat resuspendiert, das aus der nachfolgenden Behandlungsstufe stammt. Anschließend werden Hydroxide oder Carbonate zu der Suspension zugegeben, abfiltriert und das Filtrat zurückgeführt.

Der Filterkuchen wird wie in Beispiel 1 eluiert. Folgende Werte werden erhalten:

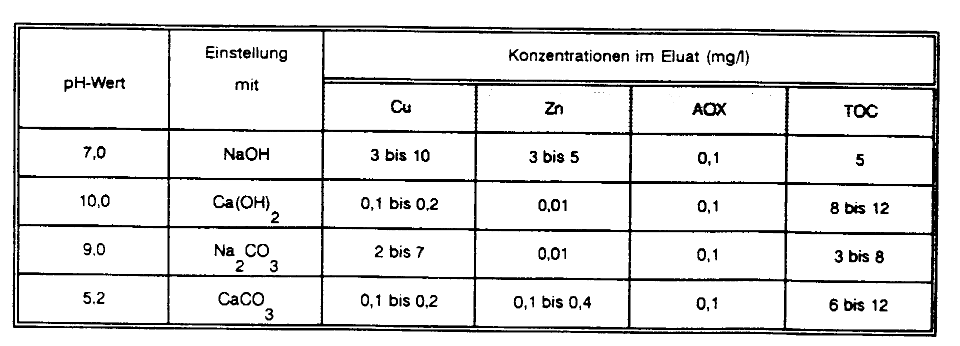

Die gemessenen Werte liegen unterhalb der zulässigen Grenzwerte.

## Patentansprüche

1. Abwasserfreies Verfahren zur Entsorgung feststoffhaltiger Rückstände einer Organochlorsilansynthese durch
a) Behandlung des aus dem Prozeß auszuschleusenden Feststoffs in wäßriger Phase mit Verbindungen von Elementen der ersten und zweiten Hauptgruppe des Periodischen Systems,
b) Auftrennung der entstehenden Suspension in eine feststoffhaltige und eine wäßrige Phase und
c) Rückführung der wäßrigen Phase in die Stufe a),
dadurch gekennzeichnet, daß man die Rückstände einer Organochlorsilansynthese in der Stufe a) mit Alkali- und/oder Erdalkalihydroxiden und/oder Alkali- und/oder Erdalkalicarbonaten versetzt.

2. Verfahren nach Anspruch 1, dadurch gekennzeichnet, daß man bei Verwendung von NaOH einen pH-Wert von mindestens 6, vorzugsweise von 6 bis 7,5, einhält.

3. Verfahren nach Anspruch 1, dadurch gekennzeichnet, daß man bei Verwendung von Ca(OH)₂ einen pH-Wert von mindestens 4,5 einhält.

4. Verfahren nach Anspruch 1, dadurch gekennzeichnet, daß man bei Verwendung von Na₂CO₃ einen pH-Wert von mindestens 5 einhält.

5. Verfahren nach Anspruch 1, dadurch gekennzeichnet, daß man bei Verwendung von CaCO₃ einen pH-Wert von mindestens 4,0 einhält.

## Claims

1. A wastewater-free process for disposing of solids-containing residues of an organochlorosilane synthesis by
a) treating in an aqueous phase with compounds of elements of the first and second main group of the Periodic Table of the Elements the solids to be ejected from the process,
b) separating the resulting suspension into a solids-containing phase and an aqueous phase and
c) recycling the aqueous phase to stage a),
characterized in that the residues of an organochlorosilane synthesis are admixed in stage a) with alkali metal hydroxides and/or alkaline earth metal hydroxides and/or alkali metal carbonates and/or alkaline earth metal carbonates.

2. A process according to claim 1, characterized in that, when NaOH is used, a pH of at least 6, preferably from 6 to 7.5, is maintained.

3. A process according to claim 1, characterized in that, when Ca(OH)₂ is used, a pH of at least 4.5 is maintained.

4. A process according to claim 1, characterized in that, when Na₂CO₃ is used, a pH of at least 5 is maintained.

5. A process according to claim 1, characterized in that, when CaCO₃ is used, a pH of at least 4.0 is maintained.

## Revendications

1. Procédé sans eau usée pour l'élimination des résidus contenant des solides d'une synthèse d'organochlorosilane par
a) traitement du solide à écluser du procédé en phase aqueuse avec des composés d'éléments des premier et second groupes principaux de la classification périodique des éléments,
b) séparation de la suspension obtenue en une phase contenant des solides et un phase aqueuse et
c) réintroduction de la phase aqueuse dans l'étape a),
caractérisé en ce qu'
on mélange les résidus d'une synthèse d'organochlorosilane dans l'étape a) avec des hydroxydes de métaux alcalins et/ou alcalino-terreux et/ou des carbonates de métaux alcalins et/ou alcalino-terreux.

2. Procédé selon la revendication 1,
caractérisé en ce que
lorsqu'on utilise NaOH on maintient un pH d'au moins 6, de préférence de 6 à 7,5.

3. Procédé selon la revendication 1,
caractérisé en ce que
lorsqu'on utilise Ca(OH)₂ on maintient un pH d'au moins 4,5.

4. Procédé selon la revendication 1,
caractérisé en ce que
lorsqu'on utilise Na₂CO₃, on maintient un pH d'au moins 5.

5. Procédé selon la revendication 1,
caractérisé en ce que
lorsqu'on utilise CaCO₃ on maintient un pH d'au moins 4,0.
